# EUROPEAN PATENT SPECIFICATION

(11) **EP 4 245 113 B1**
(45) Date of publication and mention of the grant of the patent: **13.05.2026**
(21) Application number: 23161704.4
(22) Date of filing: 14.03.2023
(51) Int. Cl.: A01D 34/00, A01D 34/82, A01D 43/063

(54) **LAWNMOWERS AND ASSOCIATED FEATURES**
RASENMÄHER UND ZUGEHÖRIGE FUNKTIONEN
TONDEUSES À GAZON ET CARACTÉRISTIQUES ASSOCIÉES

(30) Priority: 15.03.2022 US 202263319964 P
(43) Date of publication of application: 20.09.2023
(73) Proprietor: Techtronic Cordless GP, Anderson, SC 29621 (US)
(72) Inventor: MCCAMMON, Max, Anderson, 29621 (US); TORRISI, Greg, Anderson, 29621 (US); LAMBERT, Matt, Anderson, 29621 (US)
(74) Representative: Zimmermann & Partner Patentanwälte mbB

(56) References cited:
- FR-A1- 2 666 955
- FR-A1- 2 728 136
- FR-A1- 2 890 525
- US-A- 4 015 406
- US-A- 4 156 337

## Description

### FIELD

The present disclosure relates generally to lawnmowers and more particularly to bagging systems for lawnmowers.

### BACKGROUND

Lawnmowers are generally utilized to cut grass and pick up debris from a workspace. During cutting operations, or during separate collecting operations, clippings and/or debris is collected by the lawnmower. More particularly, clippings and/or debris are collected by a bagging system of the lawnmower. Bagging systems are typically coupled to the lawnmower and receive clippings and/or debris from a chute operatively coupled with a work interface, e.g., cutting blades, of the lawnmower.

It is often difficult for operators to access the bagging system, e.g., when riding on a riding lawnmower, to facilitate operational aspects thereof. For example, operators typically have to dismount the lawnmower in order to empty the bagging system. The operator must then remount the lawnmower to resume mowing.

Accordingly, improved lawnmowers and lawnmower bagging systems are desired in the art. In particular, bagging systems which provide easier operational functionality would be advantageous.

US patent application publication no. 4,156,337 describes a pivotably mounted grass catcher for a riding mower comprising a stationary subassembly adapted to be secured to the rear of the ride-on vehicle and a bag support frame mounted for pivotal movement on the stationary subassembly. A handle mounted on the bag support frame permits the operator to pivotally swing the bag support frame and the grass collector bag carried thereby to a dumping position about the pivotal support for the frame.

### BRIEF DESCRIPTION

Aspects and advantages of the invention in accordance with the present disclosure will be set forth in part in the following description, or may be obvious from the description, or may be learned through practice of the technology.

In accordance with one embodiment, a lawnmower is provided. The lawnmower includes a frame; a mower deck housing one or more cutting implements, the mower deck being coupled to the frame; a bagging system coupled to the frame, the bagging system comprising: a bagging frame removably coupled to the frame, wherein the bagging frame comprises a first section statically coupled relative to the frame and a second section configured to move relative to the first section of the bagging frame, and wherein the first and second sections of the bagging frame are removably coupled together through a pivot point and releasably coupled together through a release mechanism; a handle coupled to the second section of the bagging frame; and a bag supported by the bagging frame, wherein the release mechanism comprises a magnetic interface, the magnetic interface comprising: a striker plate coupled to the one of the first or second sections; and a magnet coupled to the other of the first or second sections, wherein the pivotal movement of the second section relative to the first section causes the magnetic interface to lock and unlock.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a perspective view of a lawnmower in accordance with embodiments of the present disclosure;
FIG. 2 is a perspective view of a bagging frame of a bagging system for a lawnmower in accordance with embodiments of the present disclosure;
FIG. 3 is an enlarged view as seen in Circle A in FIG. 2 in accordance with embodiments of the present disclosure;
FIG. 4 is an enlarged view of a release mechanism associated with a bagging system of a lawnmower in accordance with embodiments of the present disclosure;
FIG. 5 is a side view of a bagging system in accordance with embodiments of the present disclosure;
FIG. 6 is a side view of the bagging system in accordance with embodiments of the present disclosure;
FIG. 7 is a partial view of a portion of a bagging system as seen from a lower lateral side of the bagging system in accordance with embodiments of the present disclosure;
FIG. 8 is a partial view of an internal portion of the bagging system including an engagement element in accordance with embodiments of the present disclosure;
FIG. 9 is a rear view of the lawnmower in accordance with embodiments of the present disclosure; and
FIG. 10 is a perspective view of a portion of the lawnmower in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope of the claimed technology. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, embodiments in accordance with the present disclosure are configured to provide better lawnmower bagging capabilities and functionality as compared to traditional systems and methods. In particular, bagging systems described herein can include a bagging frame and a bag supported by the bagging frame. The bagging frame can generally include a first section and a second section. The first section of the bag frame can be coupled to a frame of a lawnmower. The second section of the bagging frame can be movably, e.g., pivotally, coupled to the first section of the bagging frame. A handle can be coupled with the second section of the bagging frame to allow an operator to move the second section of the bagging frame relative to the first section of the bagging frame. In an embodiment, the bag defines an open end, e.g., an open lower end, which is selectively opened and closed by a door coupled with the second section of the bagging frame. Operating the handle can cause the door to cover or uncover the open end of the bag, emptying the debris and clippings contained therein. In an embodiment, the operator can open the bagging system from a seated position on a riding lawnmower without having to dismount the lawnmower.

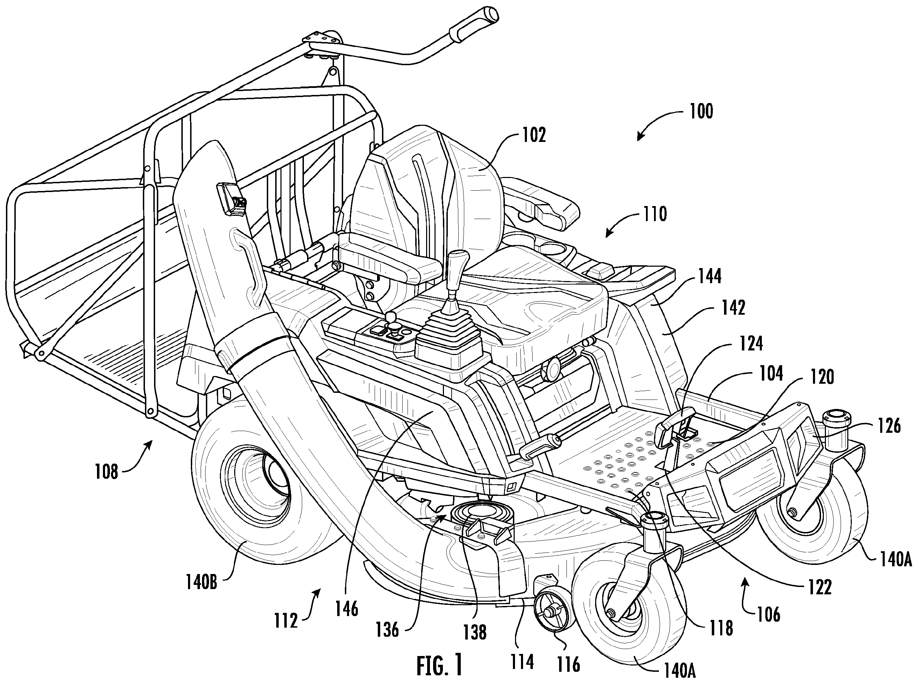

Referring now to the drawings, FIG. 1 illustrates a perspective view of a lawnmower 100 in accordance with an exemplary embodiment of the present disclosure. The lawnmower 100 depicted in FIG. 1 is a riding lawnmower which includes a seat 102 configured to support a lawnmower operator (hereinafter referred to as the "operator"). The seat 102 is coupled to a frame 104 which provides rigidity and structural support to the lawnmower 100. The frame 104 can extend between a front end 106 of the lawnmower 100 and a rear end 108 of the lawnmower 100. The frame 104 can extend between a left side 110 of the lawnmower 100 and a right side 112 of the lawnmower 100.

A mower deck 114 can be disposed at a vertical elevation below the seat 102. In certain instances, the mower deck 114 may also be disposed at least partially in front of the seat 102. At least a portion of the mower deck 114 may also be disposed below at least a portion of the frame 104. The mower deck 114 may be adjustable between a plurality of different heights, as measured relative to an underlying ground surface. For example, the mower deck 114 can be adjustable between at least two different heights, such as at least three different heights, such as at least four different heights, such as at least five different heights, such as at least six different heights, such as at least seven different heights, and so on. The operator can select a desired length of the grass by selecting between the different heights of the mower deck 114.

The mower deck 114 can include one or more walking elements, such as one or more wheels 116. The wheel(s) 116 can be configured to support the mower deck 114 relative to the underlying ground surface at least when the mower deck 114 is at the lowest height, i.e., closest to the underlying ground surface. The wheel(s) 116 may also contact the ground, for example, when the mower deck 114 passes over uneven ground (independent of which height position the mower deck 114 is at). In such instances, the wheels 116 may contact one or more elevated portions of the ground and lift the mower deck 114 relative to the frame 104. This can allow the mower deck 114 to conform to the shape of the underlying ground surface to provide a more even mowing height.

A floor 118 can be disposed above the mower deck 114. The floor 118 can be coupled with the frame 104. In certain instances, the floor 118 can define a textured surface 120 to enhance grip and increase traction for the operator. In one or more embodiments, the textured surface 120 may be integral with the floor 118. For example, the textured surface 120 can include stamped ridges or frustoconical cutouts. In other embodiments, the textured surface 120 may include a removable or discrete textured component which is coupled with the floor 118.

The floor 118 can include a cutout 122. In an embodiment, the cutout 122 can be defined entirely by the floor 118, i.e., the cutout 122 can be a closed cutout. In another embodiment, the cutout 122 can be a slot which extends into the floor 118 from a side surface of the floor 118, i.e., at least one side of the cutout 122 is open. In certain instances, the cutout 122 can be centrally disposed in a lateral direction of the lawnmower 100. In other instances, the cutout 122 can be laterally offset. A pedal 124 can be disposed at least partially within the cutout 122. The pedal 124 can provide functionality for the operator. For instance, the pedal 124 can be a brake pedal to allow the operator to brake the lawnmower 100. The pedal 124 can include a park feature which allows the operator to selectively reconfigure the lawnmower 100 to a parked mode.

In certain instances, the lawnmower 100 can further include a footrest 126. By way of example, the footrest 126 can extend between and be supported by components of the frame 104.

The footrest 126 can be disposed at a vertical elevation above the mower deck 114. In the depicted embodiment, the footrest 126 is disposed at the front end 106 of the lawnmower 100. In this regard, the operator can extend his or her feet forward to the footrest 126 for support, e.g., when seated on the lawnmower 100. The footrest 126 may also operate as a fender (or bumper) for the front end 106 of the lawnmower 100. In the event of impact, the footrest 126 can be easily swapped and replaced to reduce the costs associated with damage to the lawnmower 100.

The mower deck 114 can shield the operator from one or more cutting implements of the lawnmower 100. In an embodiment, the mower deck 114 can define one or more receiving areas 136 which each house a motor 138. The number of receiving areas 136 and motors 138 can correspond with the number of discrete cutting implements of the lawnmower 100. In a particular embodiment, the lawnmower 100 can include two cutting implements spaced apart from one another in a generally lateral (width) direction. In this regard, the mower deck 114 can include two receiving areas 136 and two motors 138. In another embodiment, the lawnmower 100 can include at least three cutting implements, such as at least four cutting implements, at least five cutting implements, or even at least six or more cutting implements.

The motors 138 can extend through the mower deck 114 such that a portion of the motors 138 is disposed above the mower deck 114 and another portion of the motors 138 is disposed below the mower deck 114. The motors 138 may be removably coupled to the mower deck 114 to allow easy access for service and repair.

The lawnmower 100 can further include a walking element configured to move the lawnmower 100 over the underlying ground surface. The walking element can include, for example, one or more wheels, treads, or the like. In the depicted embodiment, the lawnmower 100 has four wheels including two front wheels 140A and two rear wheels 140B.

In an embodiment, the front wheels 140A can be passive. That is, the front wheels 140A may not be actively driven or steered. Instead, the front wheels 140A can passively support the weight of the lawnmower 100, operator, and other features described herein. In an embodiment, the front wheels 140A can be coupled to the frame 104 such that the front wheels 140A rotate about a vertical axis. Rotation of the front wheels 140A about 360 degrees of the vertical axis can permit the lawnmower 100 to turn without incurring a radius of turn. In this regard, the lawnmower 100 can operate as a zero-turn radius (ZTR) lawnmower.

One or both of the rear wheels 140B can be powered (i.e., driven) to propel the lawnmower 100. In an embodiment, the rear wheels 140B can be independently operable, e.g., operated at different speeds as compared to one another. For instance, the rear wheels 140B can be independently powered by separate motors or operate through interfaces configured to permit different relative displacement between the rear wheels 140B. Examples of such interfaces include slip clutches, gearboxes, and the like. The direction of travel of the lawnmower 100 may be adjusted by varying the speed and direction of each of the rear wheels 140B relative to one another. For instance, the lawnmower 100 can turn left when the right rear wheel 140B is operating faster than the left rear wheel 140B. Conversely, the lawnmower 100 can turn right when the left rear wheel 140B is operating faster than the right rear wheel 140B.

In an embodiment, the front wheels 140A can be different from the rear wheels 140B. For instance, a diameter of the front wheels 140A can be less than a diameter of the rear wheels 140B. By way of another example, tire width of the front wheels 140A can be less than tire width of the rear wheels 140B. By way of yet another example, the front wheels 140A may have a different tread pattern (e.g., a lesser pronounced tread pattern) as compared to the rear wheels 140B.

The lawnmower 100 can further include a fairing 142. In one embodiment, the fairing 142 can include a single, integral piece. In another embodiment, the fairing 142 can include a plurality of discrete pieces. The word "fairing" is used interchangeably herein to refer to both single-piece and multi-piece fairings. The fairing 142 can include at least a left fairing 144 and a right fairing 146. The left and right fairings 144 and 146 may be coupled with the frame 104. In an embodiment, the left and right fairings 144 and 146 can be reflectively symmetrical with one another about a centerline of the lawnmower 100. That is, the left and right fairings 144 and 146 can have a mirrored shape as one another. In another embodiment, the left and right fairings 144 and 146 can have different shapes as compared to one another (where the different shapes are not reflectively symmetrical with one another).

In an embodiment, the left and right fairings 144 and 146 can be disposed on left and right sides of the seat 102, respectively. The left and right fairings 144 and 146 can extend rearward from the seat 102 toward the rear end 108 of the lawnmower 100. In an embodiment, the left and right fairings 144 and 146 can join together, or be disposed adjacent to one another, at a location behind the seat 102. For instance, the left and right fairings 144 and 146 can interface at a seam extending generally along the centerline of the lawnmower 100.

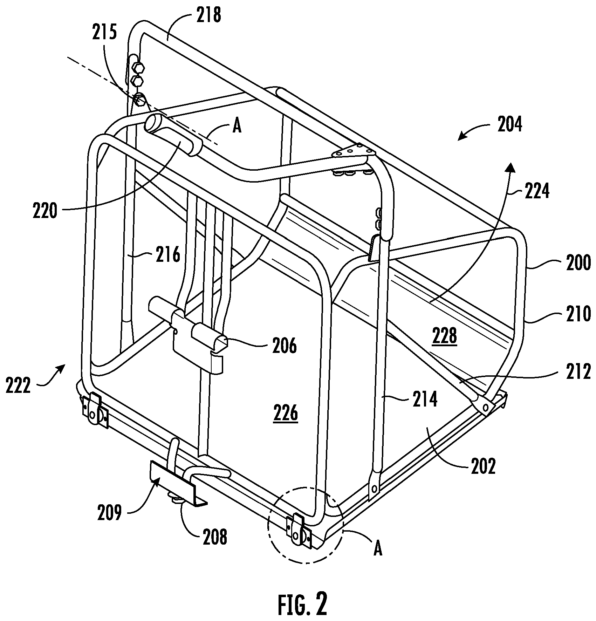

FIG. 2 depicts a bagging frame 200 and a door 202 of a bagging system 204 in accordance with an exemplary embodiment of the present disclosure. The depicted bagging frame 200 can be coupled to the lawnmower 100 depicted in FIG. 1. More particularly, the bagging frame 200 can include an interface 206 configured to couple the bagging frame 200 to the frame 104 of the lawnmower 100. By way of non-limiting example, the interface 206 can include a hooked connector configured to wrap around one or more portions of the frame 104 of the lawnmower 100. In certain instances, the bagging frame 200 can be released from the frame 104 of the lawnmower 100 by lifting the bagging frame 200 such that the hooked connector is released from the frame 104. In an embodiment, the operator may further rotate the bagging frame 200 about an axis formed by the frame 104 at a location of the interface 206. The interface 106 may alternatively include a receiver, e.g., an opening, extending through the bagging frame 200 (or a component coupled therewith) configured to receive a fastener that extends through both the bagging frame 200 and the frame 104 to selectively secure the frames 200 and 104 together. In yet other embodiments, the interface 106 may include other types of connectors that allow for quick detachment of the bagging frame 200 from the frame 104. Quick detachment is intended to refer to conditions whereby the frames 200 and 104 can be connected and disconnected from one another in less than 5 minutes, such as in less than 4 minutes, such as in less than 3 minutes, such as in less than 2 minutes, such as in less than 1 minute. In certain instances, quick detachment can be toolless, i.e., be performed without the use of tooling, such as screwdrivers, wrenches or the like.

In an embodiment, the bagging frame 200 can further include a secondary interface 208 which also interfaces with the lawnmower 100. In a particular instance, the secondary interface 208 can rest against the frame 104 of the lawnmower 100. In this regard, the secondary interface 208 can include a surface 209 which rests against the frame 104. In some instances, the surface 209 can support at least some vector of the weight of the bagging system 204 which is rotatably coupled to the frame 104 of the lawnmower 100 at the interface 206. The bagging system 204 may become heavy as clippings and debris fill the bagging system 204. Weight of these clippings and debris cause the bagger system 204 to pivot about the frame 104 at the interface 206. This pivotal motion of the bagger system 204 can be restrained by the secondary interface 208 resting against a complementary surface of the lawnmower 100.

The frame 200 can include a plurality of independent components. For example, the frame 200 can include a first section 210 and a second section 212 movably coupled to the first section 210. In an embodiment, the first and second sections 210 and 212 can be pivotally coupled together about at a pivot interface 215 defining a pivot axis A. In an embodiment, the pivot axis A may extend in a direction generally transverse to a direction of travel of the lawnmower 100. In an embodiment, at least a portion of the second section 212 can extend around an outer boundary defined by the first section 210 of the bagging frame 200. The second section 212 can include a first lateral portion 214 and a second lateral portion 216 coupled together through a transverse member 218. The transverse member 218 can extend over the first section 210 of the bagging frame 200. The first and second lateral portions 214 and 216 can be disposed on opposite left and right sides of the first section 210 of the bagging frame 200.

A handle 220 can be coupled to the second section 212 of the bagging frame 200. In an embodiment, the handle 220 can be coupled to the transverse member 218 of the second section 212 of the bagging frame 200. The handle 220 can extend from the second section 212 of the bagging frame 200 in a forward direction of the lawnmower 100. In an embodiment, the bagging frame 200 can define a forwardmost end 222. The handle 220 can extend past the forwardmost end 222 of the bagging frame 200. In this regard, the handle 220 can extend beyond the bagging system 204 to an area of the lawnmower 100 accessible by the operator while operating, e.g., riding, the lawnmower 100. For instance, the handle 220 may be accessible to the operator when the operator is positioned at the seat 102 (FIG. 1). In such a manner, the operator does not need to leave the seat 102 to deploy the bagging system 204 to empty clippings and debris therefrom.

In an embodiment, the second section 212 of the bagging frame 200 is pivotally coupled to the first section 210 of the bagging frame 200 at a first vertical elevation and the handle 220 is coupled to the second section 212 of the bagging frame 200 at a second vertical elevation above the first vertical elevation. In this regard, force applied to the handle 220 can be transferred to the second section 212 of the bagging frame 200 to allow the operator to easily rotate the second section 212 of the bagging frame 200 relative to the first section 210 of the bagging frame 200 to allow easy opening and closing of the bagging system 204.

The bagging system 204 can further include the door 202. The door 202 can be coupled with the second section 212 of the bagging frame 200. The door 202 can move from a closed position (as seen in FIG. 2) to an open position as shown by arrow 224. More particularly, the door 202 can move to the open position as the operator moves the handle 220. In an embodiment, the door 202 is configured to swing along an arc between the closed position and the open position. The operator can hold the handle 220 in the open configuration to maintain the door 202 in the open position until the clippings and debris contained in the bagging system 204 are fully emptied. At such time, the operator can release the handle 220 to allow the door 202 to return to the closed position. In certain instances, the door 202 can return to the closed position under a force of gravity. In other instances, the door 202 can be assisted to the closed position by one or more of a spring, a hydraulic actuator, or a combination thereof.

The door 202 can include a first section 226 configured to be disposed along a bottom surface of the bagging system 204 and a second section 228 disposed along a back section of the bagging system 204. The first section 210 of the door 202 can be disposed at a relative angle, as measured with respect to an underlying flat ground surface when the door 202 is in the closed position, of at least 10°, such as at least 15°, such as at least 20°, such as at least 25°, such as at least 30°, such as at least 35°, such as at least 40°. The second section 228 can form a relative angular offset from the first section 226 of at least 5°, such as at least 10°, such as at least 15°, such as at least 20°. In this regard, the angle of the second section 228, as measured relative to a flat underlying ground surface, can be steeper than an angle of the first section 226 of the door 202. This can allow the lawnmower 100 to traverse, e.g., more undulating ground surfaces and pass into deeper ground features which might otherwise become caught on the bagging system 204.

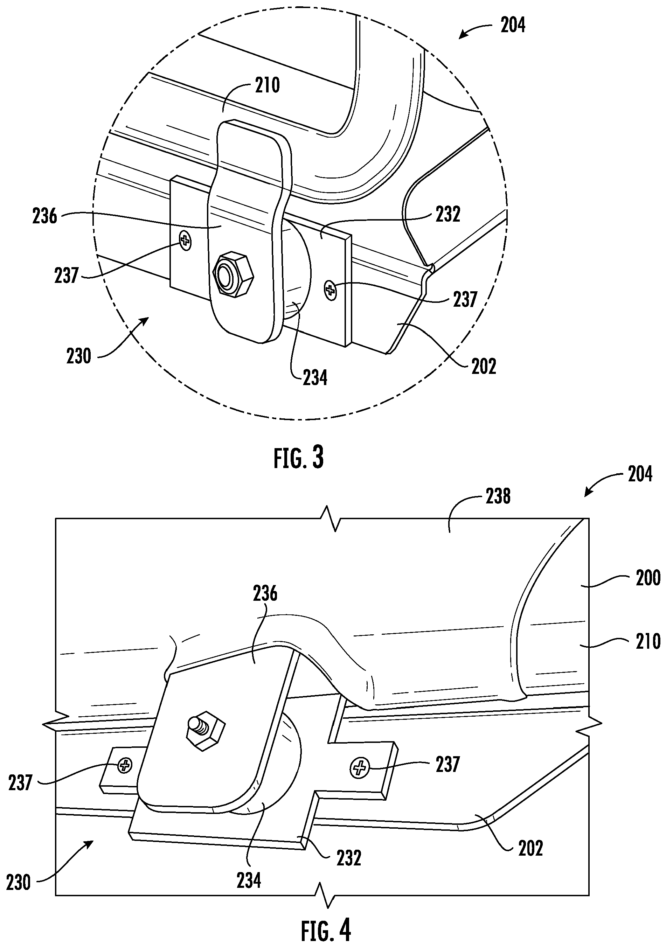

FIG. 3 illustrates an enlarged view of the portion of the bagging system 204 as seen in circle A in FIG. 2. As depicted, the bagging system 204 can further include a release mechanism 230. The release mechanism 230 can operatively maintain the door 202 in the closed position until the operator engages the handle 220. The release mechanism 230 can include a quick release mechanism. As used herein, quick release mechanisms refer to release mechanisms which allow the door 202 to open without requiring the operator to dismount from the seat 102 to unlock or open the release mechanism 230. By way of non-limiting example, the quick release mechanism can include a magnetic interface. The magnetic interface can include, for example, a striker plate 232 coupled to one of the first or second sections 210 or 212 of the bagging frame 200, and a magnet 234 coupled to the other of the first or second sections 210 or 212 of the bagging frame 200. In the depicted embodiment, the magnet 234 is coupled to the second section 212 of the bagging frame 200 through the door 202. The striker plate 232 is coupled to the first section of the bagging frame 200 through a flange 236. The striker plate 232 can define a surface against which the magnet 234 can interface to magnetically retain the door 202 in the closed position. By way of non-limiting example, the striker plate 232 can be formed from a piece of sheet metal. The striker plate 232 can alternatively be formed from another material or using another construction. The striker plate 232 can have a surface size greater than a surface size of the magnet 234. In an embodiment, the striker plate 232 can be configured to move. This movement may be referred to as wobble. In the depicted embodiment, the striker plate 232 is coupled to the door 202 through one or more couplers 237. By way of non-limiting example, the couplers 236 can include threaded couplers which interface with the door 202. The striker plate 232 can pivot, e.g., wobble, relative to the door 202, e.g., through the couplers 237. An exemplary direction of wobble is indicted by double-sided arrow W. Wobble of the striker plate 232 can permit the magnet 234 to interface with the striker plate 232 if tolerances therebetween become too great. For example, if the magnet 234 becomes rotationally displaced, the striker plate 232 can angularly deflect during interfacing with the magnet 234 to create better alignment therebetween. Acceptable amounts of wobble can be in the range of 1° and 180°, such as 1° and 90°, such as 1° and 75°, such as 1° and 60°, such as 1° and 50°, such as 1° and 40°, such as 1° and 30°, such as 1° and 20°, such as 1° and 10°, such as 1° and 5°.

In an embodiment, the magnetic interface formed between the striker plate 232 and the magnet 234 can be great enough to prevent the door 202 from opening when the lawnmower 100 traverses bumps in the ground while simultaneously being small enough to allow an operator to easily open the door 202 to empty the bagging system 202. By way of non-limiting example, the magnetic interface can have a holding force of at least 10 Newtons (N), such as at least 20 N, such as at least 30 N, such as at least 40 N, such as at least 50 N, such as at least 60 N, such as at least 70 N, such as at least 80 N, such as at least 90 N, such as at least 100 N.

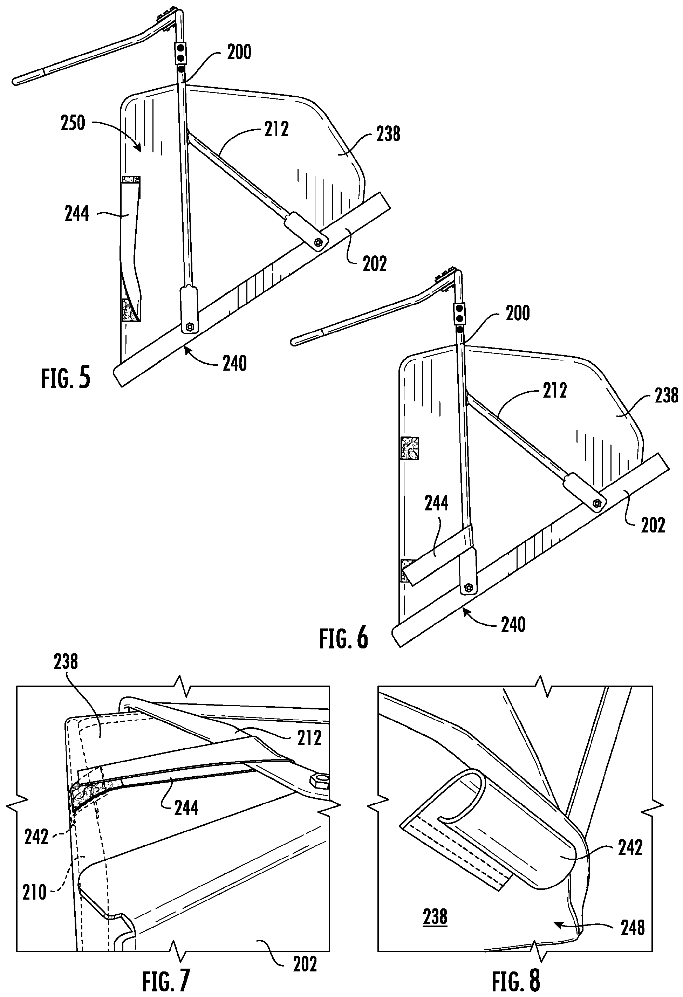

FIG. 4 illustrates a view of the release mechanism 230 with the bagging system 204 further including a bag 238. The bag 238 can be formed from a relatively pliable material such as a fabric or textile. In an embodiment, the bag 238 can be formed from a material more deformable than a material of the bagging frame 200. In an embodiment, the bag 238 can be wrapped around at least a portion of the bagging frame 200. The bag 238 can be supported by the bagging frame 200. For example, the bag 238 can be coupled to the bagging frame 200 by one or more fasteners such that some portions of the bagging frame 200 are exposed from the bag 238 while other portions of the bagging frame 200 are hidden by the bag 238. Referring to FIGS. 5 and 6, the first section 210 of the bagging frame 200 (not seen in FIGS. 5 and 6) can be disposed at least partially within the bag 238 and the second section 212 of the bagging frame 200 can be disposed at least partially outside of the bag 224. In some instances, the first section 210 of the bagging frame 200 can support the bag 238 while the second portion 212 does not provide direct structural support to the bag 238.

Referring to FIGS. 5 and 6, the bag 238 can define an open end 240 which is selectively covered by the door 202. When the door 202 is in the open position, the open end 240 of the bag 238 can be open such that clippings and debris can be emptied from the bag 238. Conversely, when the door 202 is in the closed position, the open end 240 of the bag 238 can be closed such that clippings and debris cannot be emptied from the bag 238. Clippings and debris can be supported by, i.e., rest on, the door 202 when the door 202 is in the closed position.

In an embodiment, the bag 238 can include one or more features which allow an operator to further lock the door 202 in the closed position. Referring to FIGS. 5 to 8, the bagging system 204 can include an engagement element 242 coupled to the first section 210 of the bagging frame 200 and a strap 244 disposed along an outside of the bag 238 and operatively coupled to the engagement element 242.

As depicted in FIG. 5, the strap 244 can be freely movable relative to the bag 238. As depicted in FIG. 6, the strap 244 can be coupled to the second section 212 of the bagging frame 200, e.g., wrapped around the second section 212 of the bagging frame 200, and allow an operator to tighten the second section 212 of the bagging frame 200 relative to the first section 210 of the bagging frame 200. That is, the operator can extend the strap 244 around the second section 212 of the bagging frame 200 and tighten the strap 244 to pull and secure the second section 212 of the bagging frame 200 relative to the first section 210 of the bagging frame 200.

As depicted in FIG. 8, the engagement element 242 can include a hook coupled to an inside 248 of the bag 238. The strap 244 can be coupled to the bag 238 at an outside location 250 of the bag 238 at a location proximate to the hook. Thus, as the operator pulls on the strap 244, the hook (which is engaged with the first section 210 of the bagging frame 200) can pull the first and second sections 210 and 212 together. After extending around the second section 212, the strap 244 can be doubled over and secured, e.g., to itself, through, e.g., hook and loop engagement or another fastener system, to retain the second section 212 in the closed position. In this regard, the strap 244 can extend from the engagement element 242, around the second section 212, and then couple to itself, in sequential order.

In an embodiment, the strap 244 may be accessible to the operator while riding on the lawnmower 100, e.g., on the seat 102. In this regard, the operator may turn around to undue the strap 244 to allow the operator to then utilize the handle 220 to move the door 202 to the open position. As described above, the operator must overcome the retention force of the release mechanism 230 while moving the handle 220 to the emptying position.

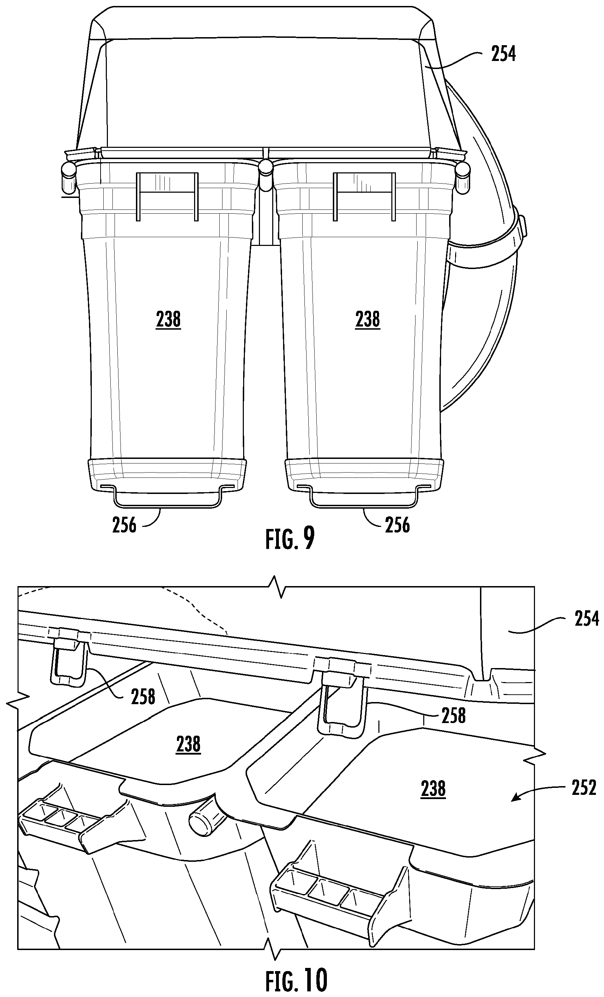

In some instances, the bag 238 can be flexible. In other instances, the bag 238 can be relatively rigid. The term "bag" as used with respect to the bag 238 is intended to refer to a vessel defining a volume configured to receive debris and clippings from the discharge chute of the mower deck 114. In an embodiment, the bagging frame 200 can be integrated into the bag 238 like as shown in FIGS. 9 and 10. For example, the bagging frame 200 and the bag 238 may be integral with one another, e.g., formed from a rigid plastic. In another embodiment, the bagging frame 200 can include a relatively rigid structure which retains one or more flexible bags 238. By way of non-limiting example, the bag 238 can comprise a fabric and the bagging frame 200 can comprise at least one of a metal, an alloy, a composite, or a plastic.

In an embodiment depicted in FIGS. 9 and 10, the bag 238 further includes an open top 252. A cover 254 is configured to cover the open top 252 of the bag 238 and prevent egress of debris therefrom. In an embodiment, the cover 254 can define an opening (not illustrated) in communication with an outlet chute extending, e.g., from the mower deck 114 to transport clippings from the cutting implements to the bag 238. In another embodiment, the opening can be part of another portion of the bagging system 204. In certain instances, the bag 238 can include a handle 256.

In one or more embodiments, the bagging system 204 can include one or more latches 258 configured to keep the bag 238 from sliding out from the bagging system 204. In the depicted embodiment, at least one of the latch(es) 258 is a projecting body which extends from the cover 254. The latch(es) 258 can extend, e.g., down from the cover 254, a distance sufficient to prevent the bag 238 from sliding backwards. In an embodiment, the latch(es) 258 can interface with the handle 256 of the bag 238. For instance, the latch(es) 258 can extend into, or even through, an opening formed by the handle 256. In this regard, the latch 258 can form a continuously closed side through which the bag 238 cannot pass. Thus, the latch 258 can prevents the bag 238 from translating in the rearward direction such that it might fall from the lawnmower 100. When the cover 254 is moved, e.g., lifted, the latch(es) 258 can move therewith. As such, the latch(es) 258 may automatically move to the disengaged position when the operator removes the cover 254 to access the bag 238. The latch(es) 258 can be constructed from a resilient material like, e.g., metal, an alloy, or the like. The latch(es) 258 in the depicted embodiment has a U shape. Other shapes and designs are contemplated herein.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. A lawnmower (100) comprising:
a frame (104);
a mower deck (114) housing one or more cutting implements, the mower deck (114) being coupled to the frame (104);
a bagging system (204) coupled to the frame (104), the bagging system (204) comprising:
a bagging frame (200) removably coupled to the frame (104), wherein the bagging frame (200) comprises a first section (210) statically coupled relative to the frame (104) and a second section (212) configured to move relative to the first section (210) of the bagging frame (200), and wherein the first and second sections (210, 212) of the bagging frame (200) are moveably coupled together through a pivot point (215) and releasably coupled together through a release mechanism (230);
a handle (220) coupled to the second section (212) of the bagging frame (200); and
a bag (238) supported by the bagging frame (200),
**characterised in that** the release mechanism (230) comprises a magnetic interface, the magnetic interface comprising:
a striker plate (232) coupled to one of the first or second sections (210, 212); and
a magnet (234) coupled to the other of the first or second sections (210, 212),
wherein the pivotal movement of the second section (212) relative to the first section (210) causes the magnetic interface to lock and unlock.

2. The lawnmower (100) of claim 1, wherein the handle (220) extends from the second section (212) of the bagging frame (200) in a forward direction of the lawnmower (100).

3. The lawnmower (100) of any one of claims 1 or 2, wherein the bagging frame (200) defines a forwardmost end (222), and wherein the handle (220) extends past the forwardmost end (222) of the bagging frame (200).

4. The lawnmower (100) of any one of claims 1 to 3, wherein the bag (238) comprises an open end (240), and wherein the open end (240) of the bag (238) is selectively covered by a door (202).

5. The lawnmower (100) of claim 4, wherein the door (202) is coupled to the second section (212) of the bagging frame (200) such that the door (202) moves from a closed position to an open position when an operator moves the handle (220) to an emptying position.

6. The lawnmower (100) of any one of claims 4 or 5, wherein
the open end (240) of the bag (238) is disposed at a bottom side of the bagging system (204) when the bagging system (204) is coupled to the frame (104), and
when the lawnmower (100) traverses an underlying flat ground surface, the door (202) is disposed at a relative angle of at least 10° with respect to the underlying flat ground surface when the door (202) is in the closed position.

7. The lawnmower (100) of any one of claims 4 to 6, wherein the door (202) is configured to swing along an arc between the closed position and an open position.

8. The lawnmower (100) of any one of claims 1 to 7, wherein the release mechanism (230) is configured to restrain movement of the second section (212) of the bagging frame (200) relative to the first section (210) of the bagging frame (200).

9. The lawnmower (100) of any one of claims 1 to 8, wherein the second section (212) of the bagging frame (200) is pivotally coupled to the first section (210) of the bagging frame (200) at a first vertical elevation above an open end (240) of the bag (238), and wherein the handle (220) is coupled to the second section (212) of the bagging frame (200) at a second vertical elevation above the first vertical elevation.

10. The lawnmower (100) of any one of claims 1 to 9, wherein the bag (238) comprises:
an engagement element (242) coupled to the first section (210) of the bagging frame (200); and
a strap (244) disposed along an outside of the bag (238), the strap (244) being operatively coupled to the engagement element (242),
wherein the strap (244) is couplable to the second section (212) of the bagging frame (200) and allows an operator to tighten the second section (212) of the bagging frame (200) relative to the first section (210) of the bagging frame (200).

11. The lawnmower (100) of claim 10, wherein the engagement element (242) comprises a hook coupled to an inside (248) of the bag (238), wherein the strap (244) is coupled to the bag (238) at an outside location (250) of the bag (238) at a location proximate to the hook, and wherein the strap (244) is configured to extend around a portion of the second section (212) of the bagging frame (200).

12. The lawnmower (100) of any one of claims 1 to 11, wherein the bagging system (204) is removable from the lawnmower (100) without removing any portion of the bag (238) from the bagging frame (200).

13. The lawnmower (100) of any one of claims 1 to 12, wherein the second section (212) of the bagging frame (200) extends around the first section (210) of the bagging frame (200).

14. The lawnmower (100) of any one of claims 1 to 13, wherein the bag (238) comprises a fabric, and wherein the bagging frame (200) comprises at least one of a metal, an alloy, a composite, or a plastic.

## Patentansprüche

1. Rasenmäher (100), umfassend:
einen Rahmen (104);
ein Mähdeck (114), das ein oder mehrere Schneidwerkzeuge aufnimmt, wobei das Mähdeck (114) mit dem Rahmen (104) gekoppelt ist;
ein Auffangsystem (204), das mit dem Rahmen (104) gekoppelt ist, wobei das Auffangsystem (204) umfasst:
einen Auffangrahmen (200), der abnehmbar mit dem Rahmen (104) gekoppelt ist, wobei der Auffangrahmen (200) einen ersten Abschnitt (210) umfasst, der relativ zum Rahmen (104) statisch gekoppelt ist, sowie einen zweiten Abschnitt (212), der dazu ausgelegt ist, sich relativ zu dem ersten Abschnitt (210) des Auffangrahmens (200) zu bewegen, und wobei der erste und der zweite Abschnitt (210, 212) des Auffangrahmens (200) über einen Schwenkpunkt (215) beweglich miteinander gekoppelt und über einen Entriegelungsmechanismus (230) lösbar miteinander gekoppelt sind;
einen Griff (220), der mit dem zweiten Abschnitt (212) des Auffangrahmens (200) gekoppelt ist; und
einen von dem Auffangrahmen (200) getragenen Fangsack (238),
**dadurch gekennzeichnet, dass**
der Entriegelungsmechanismus (230) eine magnetische Schnittstelle umfasst, wobei die magnetische Schnittstelle umfasst:
eine Aufschlagplatte (232), die mit dem einen aus erstem und zweitem Abschnitt (210, 212) gekoppelt ist; und
einen Magneten (234), der mit dem anderen aus erstem und zweitem Abschnitt (210, 212) gekoppelt ist, wobei die Schwenkbewegung des zweiten Abschnitts (212) relativ zu dem ersten Abschnitt (210) bewirkt, dass die magnetische Schnittstelle verriegelt bzw. entriegelt wird.

2. Rasenmäher (100) nach Anspruch 1,
wobei sich der Griff (220) von dem zweiten Abschnitt (212) des Auffangrahmens (200) in Vorwärtsrichtung des Rasenmähers (100) erstreckt.

3. Rasenmäher (100) nach einem der Ansprüche 1 oder 2,
wobei der Auffangrahmen (200) ein vorderstes Ende (222) bildet und wobei sich der Griff (220) über das vorderste Ende (222) des Auffangrahmens (200) hinaus erstreckt.

4. Rasenmäher (100) nach einem der Ansprüche 1 bis 3,
wobei der Fangsack (238) ein offenes Ende (240) aufweist und wobei das offene Ende (240) des Fangsacks (238) wahlweise durch eine Klappe (202) abgedeckt ist.

5. Rasenmäher (100) nach Anspruch 4,
wobei die Klappe (202) mit dem zweiten Abschnitt (212) des Auffangrahmens (200) gekoppelt ist, so dass sich die Klappe (202) aus einer geschlossenen Position in eine geöffnete Position bewegt, wenn ein Bediener den Griff (220) in eine Entleerungsposition bewegt.

6. Rasenmäher (100) nach einem der Ansprüche 4 oder 5,
wobei das offene Ende (240) des Fangsacks (238) an einer Unterseite des Auffangsystems (204) angeordnet ist, wenn das Auffangsystem (204) mit dem Rahmen (104) gekoppelt ist, und
wenn der Rasenmäher (100) über eine darunterliegende ebene Bodenfläche fährt, die Klappe (202) in der geschlossenen Position in einem relativen Winkel von mindestens 10° zu der darunterliegenden ebenen Bodenfläche angeordnet ist.

7. Rasenmäher (100) nach einem der Ansprüche 4 bis 6,
wobei die Klappe (202) dazu ausgebildet ist, entlang eines Bogens zwischen der geschlossenen Position und einer geöffneten Position zu schwenken.

8. Rasenmäher (100) nach einem der Ansprüche 1 bis 7,
wobei der Entriegelungsmechanismus (230) dazu ausgebildet ist, die Bewegung des zweiten Abschnitts (212) des Auffangrahmens (200) relativ zu dem ersten Abschnitt (210) des Auffangrahmens (200) zu begrenzen.

9. Rasenmäher (100) nach einem der Ansprüche 1 bis 8,
wobei der zweite Abschnitt (212) des Auffangrahmens (200) in einer ersten vertikalen Höhe über einem offenen Ende (240) des Fangsacks (238) schwenkbar mit dem ersten Abschnitt (210) des Auffangrahmens (200) gekoppelt ist, und wobei der Griff (220) in einer zweiten vertikalen Höhe über der ersten vertikalen Höhe mit dem zweiten Abschnitt (212) des Auffangrahmens (200) gekoppelt ist.

10. Rasenmäher (100) nach einem der Ansprüche 1 bis 9,
wobei der Fangsack (238) umfasst:
ein Eingriffselement (242), das mit dem ersten Abschnitt (210) des Auffangrahmens (200) gekoppelt ist; und
einen Riemen (244), der entlang einer Außenseite des Fangsacks (238) angeordnet ist, wobei der Riemen (244) funktionsmäßig mit dem Eingriffselement (242) gekoppelt ist,
wobei der Riemen (244) mit dem zweiten Abschnitt (212) des Auffangrahmens (200) koppelbar ist und es einem Bediener ermöglicht, den zweiten Abschnitt (212) des Auffangrahmens (200) relativ zu dem ersten Abschnitt (210) des Auffangrahmens (200) zu verspannen.

11. Rasenmäher (100) nach Anspruch 10,
wobei das Eingriffselement (242) einen Haken umfasst, der mit einer Innenseite (248) des Fangsacks (238) gekoppelt ist, wobei der Riemen (244) an einer äußeren Stelle (250) des Fangsacks (238) an einer Stelle in der Nähe des Hakens mit dem Fangsack (238) gekoppelt ist, und
wobei der Riemen (244) so ausgebildet ist, dass er sich um einen Teil des zweiten Abschnitts (212) des Auffangrahmens (200) herum erstreckt.

12. Rasenmäher (100) nach einem der Ansprüche 1 bis 11,
wobei das Auffangsystem (204) von dem Rasenmäher (100) abnehmbar ist, ohne dass ein Teil des Fangsacks (238) von dem Auffangrahmen (200) entfernt werden muss.

13. Rasenmäher (100) nach einem der Ansprüche 1 bis 12,
wobei sich der zweite Abschnitt (212) des Auffangrahmens (200) um den ersten Abschnitt (210) des Auffangrahmens (200) herum erstreckt.

14. Rasenmäher (100) nach einem der Ansprüche 1 bis 13,
wobei der Fangsack (238) ein Gewebe umfasst und wobei der Auffangrahmen (200) zumindest eines der folgenden Materialien umfasst: ein Metall, eine Legierung, einen Verbundwerkstoff oder ein Kunststoffmaterial.

## Revendications

1. Tondeuse à gazon (100) comprenant :
un châssis (104) ;
un plateau de coupe (114) logeant un ou plusieurs outils de coupe, le plateau de coupe (114) étant couplé au châssis (104) ;
un système de ramassage (204) couplé au châssis (104), le système de ramassage (204) comprenant :
un cadre de ramassage (200) couplé de manière amovible au châssis (104), le cadre de ramassage (200) comprenant une première section (210) couplée de manière statique par rapport au châssis (104) et une deuxième section (212) conçue pour se déplacer par rapport à la première section (210) du cadre de ramassage (200), et les première et deuxième sections (210, 212) du cadre de ramassage (200) étant couplées de manière mobile l'une à l'autre par l'intermédiaire d'un point de pivotement (215) et couplées de manière amovible l'une à l'autre par l'intermédiaire d'un mécanisme de déverrouillage (230) ;
une poignée (220) couplée à la deuxième section (212) du cadre de ramassage (200) ;
un sac (238) supporté par le cadre ramassage (200),
**caractérisée en ce que**
le mécanisme de déverrouillage (230) comprend une interface magnétique, l'interface magnétique comprenant :
une plaque de frappe (232) couplée à l'une parmi les première et deuxième sections (210, 212) ; et
un aimant (234) couplé à l'autre parmi les première et deuxième sections (210, 212),
le mouvement de pivotement de la deuxième section (212) par rapport à la première section (210) assurant le verrouillage et le déverrouillage de l'interface magnétique.

2. Tondeuse à gazon (100) selon la revendication 1,
dans laquelle la poignée (220) s'étend depuis la deuxième section (212) du cadre de ramassage (200) dans une direction vers l'avant de la tondeuse à gazon (100).

3. Tondeuse à gazon (100) selon l'une des revendications 1 ou 2,
dans laquelle le cadre de ramassage (200) définit une extrémité avant (222), et la poignée (220) s'étend au-delà de l'extrémité avant (222) du cadre de ramassage (200).

4. Tondeuse à gazon (100) selon l'une des revendications 1 à 3,
dans laquelle le sac (238) comprend une extrémité ouverte (240), et l'extrémité ouverte (240) du sac (238) est recouverte de manière sélective par un volet (202).

5. Tondeuse à gazon (100) selon la revendication 4,
dans laquelle le volet (202) est couplé à la deuxième section (212) du cadre de ramassage (200) de telle sorte que le volet (202) se déplace d'une position fermée à une position ouverte lorsqu'un opérateur déplace la poignée (220) vers une position de vidage.

6. Tondeuse à gazon (100) selon l'une des revendications 4 ou 5,
dans laquelle l'extrémité ouverte (240) du sac (238) est disposée sur une face inférieure du système de ramassage (204) lorsque le système de ramassage (204) est couplé au châssis (104), et
lorsque la tondeuse à gazon (100) se déplace sur une surface de sol plane sous-jacente, le volet (202) est disposé selon un angle relatif d'au moins 10° par rapport à la surface de sol plane sous-jacente lorsque le volet (202) est en position fermée.

7. Tondeuse à gazon (100) selon l'une des revendications 4 à 6,
dans laquelle le volet (202) est conçu pour pivoter selon un arc entre la position fermée et une position ouverte.

8. Tondeuse à gazon (100) selon l'une des revendications 1 à 7,
dans laquelle le mécanisme de déverrouillage (230) est conçu pour limiter le mouvement de la deuxième section (212) du cadre de ramassage (200) par rapport à la première section (210) du cadre de ramassage (200).

9. Tondeuse à gazon (100) selon l'une des revendications 1 à 8,
dans laquelle la deuxième section (212) du cadre de ramassage (200) est couplée de manière pivotante à la première section (210) du cadre de ramassage (200) à une première hauteur verticale au-dessus d'une extrémité ouverte (240) du sac (238), et la poignée (220) est couplée à la deuxième section (212) du cadre de ramassage (200) à une deuxième hauteur verticale au-dessus de la première hauteur verticale.

10. Tondeuse à gazon (100) selon l'une des revendications 1 à 9,
dans laquelle le sac (238) comprend :
un élément d'engagement (242) couplé à la première section (210) du cadre de ramassage (200) ; et
une sangle (244) disposée le long d'une face extérieure du sac (238), la sangle (244) étant couplée de manière fonctionnelle à l'élément d'engagement (242),
la sangle (244) pouvant être couplée à la deuxième section (212) du cadre de ramassage (200) et permettant à un opérateur de serrer la deuxième section (212) du cadre de ramassage (200) par rapport à la première section (210) du cadre de ramassage (200).

11. Tondeuse à gazon (100) selon la revendication 10,
dans laquelle l'élément d'engagement (242) comprend un crochet fixé à l'intérieur (248) du sac (238), la sangle (244) étant couplée au sac (238) à un emplacement extérieur (250) du sac (238) à un emplacement proche du crochet, et
la sangle (244) est conçue pour s'étendre autour d'une partie de la deuxième section (212) du cadre de ramassage (200).

12. Tondeuse à gazon (100) selon l'une des revendications 1 à 11,
dans laquelle le système de ramassage (204) est amovible de la tondeuse à gazon (100) sans retirer une partie du sac (238) du cadre de ramassage (200).

13. Tondeuse à gazon (100) selon l'une des revendications 1 à 12,
dans laquelle la deuxième section (212) du cadre de ramassage (200) s'étend autour de la première section (210) du cadre de ramassage (200).

14. Tondeuse à gazon (100) selon l'une des revendications 1 à 13,
dans laquelle le sac (238) comprend un tissu, et le cadre de ramassage (200) comprend au moins l'un des matériaux suivants : un métal, un alliage, un composite ou une matière plastique.
